# EUROPÄISCHE PATENTANMELDUNG

(11) **EP 1 748 536 A1**
(43) Veröffentlichungstag der Anmeldung: **31.01.2007**
(21) Anmeldenummer: 05016636.2
(22) Anmeldetag: 30.07.2005
(51) Int. Cl.: H02K 5/128, H02K 9/04

(54) **Elektromotor**

(71) Anmelder: ThyssenKrupp Aufzugswerke GmbH, 73765 Neuhausen (DE)
(72) Erfinder: Herkommer, Jürgen, 70597 Stuttgart (DE); Nägele, Roland, 73765 Neuhausen (DE); Scholz, Günter, 72622 Nürtingen (DE); Schulze, Jochen, 72760 Reutlingen (DE); Steimer, Frank, 73770 Denkendorf (DE); Vogler, Eberhard, 73765 Neuhausen (DE)
(74) Vertreter: Hoeger, Stellrecht & Partner Patentanwälte

(57) **Zusammenfassung**

Die Erfindung betrifft einen Elektromotor mit einem Gehäuse (12), das einen Rotor (26) und einen Stator (30) aufnimmt, wobei der Rotor (26) mit Permanentmagneten (28) bestückt ist und in Umfangsrichtung vom Stator (30) umgeben ist, wobei zwischen den Permanentmagneten (28) und dem Stator (30) ein Luftspalt ausgebildet ist und der Stator (30) ein Blechpaket (31) und Wicklungen aufweist mit das Blechpaket (31) stirnseitig überragenden Wicklungsköpfen (32, 33), und mit mindestens einem Kühlkanal (40), der von Kühlluft durchströmbar ist. Um den Elektromotor derart weiterzubilden, dass er bei geringem Wartungsaufwand wirkungsvoll gekühlt werden kann, wird erfindungsgemäß vorgeschlagen, dass sich der Kühlkanal (40) außenseitig entlang des Blechpaktes (31) und entlang der Wicklungsköpfe (32, 33) erstreckt und vom Luftspalt abgetrennt ist.

## Beschreibung

Die Erfindung betrifft einen Elektromotor mit einem Gehäuse, das einen Rotor und einen Stator aufnimmt, wobei der Rotor mit Permanentmagneten bestückt ist und in Umfangsrichtung vom Stator umgeben ist, und wobei zwischen dem Rotor und dem Stator ein Luftspalt ausgebildet ist und der Stator ein Blechpaket und Wicklungen aufweist mit das Blechpaket stirnseitig überragenden Wicklungsköpfen, und mit mindestens einem Kühlkanal, der von Kühlluft durchströmbar ist.

Zur Kühlung von Elektromotoren ist es seit langem bekannt, Kühlluft an der Außenseite des Motors oder auch durch den Motor hindurch zu führen. Zur außenseitigen Kühlung kommen häufig Kühlrippen zum Einsatz, die nach außen von einem Motorgehäuse abstehen. Eine derartige Kühlung erlaubt allerdings nur einen beschränkten Wärmeabfluss. Häufig wird daher die Kühlluft durch den Motor hindurchgeführt, um direkt mit den Wärmequellen innerhalb des Motors in Kontakt zu gelangen. Dies erlaubt zwar einen wirkungsvollen Wärmeabfluss, allerdings muss bei Einsatz von Permanentmagneten sichergestellt werden, dass die Kühlluft keine magnetisierbaren Staubpartikel mit sich führt, die sich an den Permanentmagneten ablagern könnten. Die Kühlluft wird daher häufig gefiltert. Die Filter müssen allerdings von Zeit zur Zeit gereinigt und ausgewechselt werden. Dadurch erhöht sich der Wartungsaufwand des Elektromotors.

Aufgabe der vorliegenden Erfindung ist es, einen Elektromotor der eingangs genannten Art derart weiterzubilden, dass er bei geringem Wartungsaufwand wirkungsvoll gekühlt werden kann.

Diese Aufgabe wird bei einem Elektromotor der gattungsgemäßen Art erfindungsgemäß dadurch gelöst, dass sich der Kühlkanal außenseitig entlang des Blechpakets und entlang der Wicklungsköpfe erstreckt und vom Luftspalt abgetrennt ist.

Eine derartige Ausgestaltung hat den Vorteil, dass die Kühlluft, die den Kühlkanal durchströmt, unmittelbar mit dem Blechpaket und den Wicklungsköpfen in Kontakt kommen kann, so dass eine wirkungsvolle Wärmeabfuhr ermöglicht wird. Eine Verunreinigung der Permanentmagnete durch magnetisierbare Staubpartikel, die von der Kühlluft mitgeführt werden, wird jedoch vermieden, da der Kühlkanal vom Luftspalt abgetrennt ist. Es besteht also keine Strömungsverbindung zwischen dem Kühlkanal und dem Luftspalt, und folglich kann auch keine Kühlluft in den Luftspalt eindringen. Ein Filter, der während des Betriebes des Elektromotors überwacht und von Zeit zu Zeit gewartet werden müsste, kann folglich entfallen.

Der erfindungsgemäße Aufbau des Elektromotors erlaubt eine wirkungsvolle Kühlung, so dass der Elektromotor sehr kompakt ausgestaltet werden kann und folglich ein verhältnismäßig geringes Bauvolumen aufweisen kann, ohne dass die Leistung des Elektromotors verringert werden müsste.

Der Elektromotor kann als Aufzugantrieb für eine Aufzuganlage ausgestaltet und beispielsweise mit einer Treibscheibe gekoppelt sein. Vorzugsweise ist der Elektromotor getriebelos mit der Treibscheibe gekoppelt.

Von besonderem Vorteil ist es, wenn die Wicklungsköpfe des Stators in den Kühlkanal eintauchen. Dadurch können die von den beiden Stirnseiten des Blechpakets abstehenden Wicklungsköpfe sowohl außenseitig als auch innenseitig von Kühlluft kontaktiert werden. Dies erlaubt eine besonders wirkungsvolle Wärmeabfuhr.

Zur Optimierung des Wärmeabflusses ist es von Vorteil, wenn um das Blechpaket des Stators herum zum Gehäuse hin Kühlkanäle und den Stator abstützende Statorstützen angeordnet sind, wobei bezogen auf die Umfangsrichtung die Statorstützen schmäler sind als die Kühlkanäle. Mit Hilfe der Statorstützen kann der Stator am Gehäuse abgestützt werden, und zwischen zwei benachbarten Statorstützen erstreckt sich jeweils ein Kühlkanal, so dass die Kühlluft unmittelbar mit dem Blechpaket des Stators in Kontakt gelangen kann. Die Breite der Statorstützen ist geringer gewählt als die Breite der Kühlkanäle bezogen auf die Umfangsrichtung des Stators, so dass die Kühlluft einen möglichst großen Oberflächenbereich des Blechpakets unmittelbar kontaktieren kann. Die Statorstützen können beispielsweise als von der Innenseite des Gehäuses abstehende Stützrippen ausgestaltet sein, die vorzugsweise einstückig mit dem Gehäuse verbunden sind.

Alternativ kann vorgesehen sein, dass ein einziger Kühlkanal das Blechpaket und die Wicklungsköpfe umgibt, wobei den Stator abstützende Stützrippen den Kühlkanal in radialer Richtung durchgreifen. Es kann beispielsweise zwischen dem Stator und dem Gehäuse ein Ringraum ausgebildet sein, der den Kühlkanal sowie die Statorstützen aufnimmt, wobei der Stator über die Statorstützen an der Innenseite des Gehäuses abgestützt ist.

Um den mindestens einen Kühlkanal vom Luftspalt abtrennen zu können, ist es günstig, wenn sich an die beiden Stirnseiten des Blechpakets jeweils eine Trennwand anschließt, die der radialen Innenseite eines Wicklungskopfes gegenüberliegt. Mit Hilfe der Trennwand kann der Kühlkanal auf konstruktiv einfache Weise vom Luftspalt abgetrennt werden. Es kann beispielsweise vorgesehen sein, dass die Trennwände in Höhe des Innendurchmessers des Blechpakets strömungsdicht jeweils an einer Stirnseite des Blechpakets anliegen.

Bei einer bevorzugten Ausführungsform sind die Trennwände hülsenförmig ausgestaltet. Dadurch kann die Herstellung und die Montage der Trennwände vereinfacht werden.

Vorzugsweise sind die Trennwände jeweils zwischen einem Gehäuseteil und einer Stirnseite des Blechpaktes angeordnet. Es kann vorgesehen sein, dass sich in axialer Richtung zumindest an eine Trennwand ein Gehäuseteil in Form eines axial ausgerichteten Kragens anschließt. Das Gehäuse kann beispielsweise einen Gehäusedeckel und einen Gehäusetopf aufweisen, wobei ein erster Kragen an eine Bodenwand des Gehäusetopfes und ein zweiter Kragen an den Gehäusedeckel angeformt ist.

Statt separater Trennwände, die zwischen einem Gehäuseteil und einer Stirnseite des Blechpaketes angeordnet sind, ist bei einer alternativen Ausgestaltung vorgesehen, dass die Trennwände von Teilen des Gehäuses ausgebildet werden. So kann beispielsweise vorgesehen sein, dass sich ein axial ausgerichteter Kragen, der an den Gehäusedeckel oder den Gehäusetopf angeformt ist, bis an eine Stirnseite des Blechpakets erstreckt. Dieser Kragen bildet dann eine Trennwand aus, die den mindestens einen Kühlkanal vom Luftspalt abtrennt.

Zwischen den Trennwänden und dem jeweils zugeordneten Gehäuseteil ist bevorzugt mindestens ein Dichtungselement angeordnet. Dadurch kann auf wirkungsvolle Weise das Einströmen von Kühlluft in den Luftspalt verhindert werden.

Es kann auch vorgesehen sein, dass zwischen den Trennwänden und der jeweils zugeordneten Stirnseite des Blechpakets ein Dichtungselement angeordnet ist, mit dessen Hilfe sichergestellt ist, dass zwischen den Trennwänden und der jeweils zugeordneten Stirnseite des Blechpakets keine Kühlluft in den Luftspalt einströmen kann.

Günstig ist es, wenn die Trennwände oder zumindest ein Rand der Trennwände als Dichtungselement ausgebildet sind.

Von besonderem Vorteil ist es, wenn das Dichtungselement elastisch verformbar ist, denn dies ermöglicht es, mit Hilfe des Dichtungselementes Fertigungstoleranzen auszugleichen. Es kann beispielsweise vorgesehen sein, dass das Dichtungselement einen verformbaren Hohlkörper ausbildet, insbesondere kann das Dichtungselement als ringförmiger Schlauch ausgestaltet sein.

Vorzugsweise ist das Dichtungselement stirnseitig auf eine Trennwand aufsteckbar. Beispielsweise kann das Dichtungselement eine Ringnut aufweisen, in die ein Endbereich einer ringförmig ausgestalteten Trennwand eintauchen kann.

Bei einer vorteilhaften Ausführungsform ist das Dichtungselement aus einem temperaturbeständigen Material, zum Beispiel einem Silikonmaterial, gefertigt.

Es kann vorgesehen sein, dass an der Motorwelle des Elektromotors ein Lüfterrad angeordnet ist, das mit der Drehzahl der Motorwelle umläuft und mit dessen Hilfe dem Kühlkanal Kühlluft von außen zugeführt werden kann. Von ganz besonderem Vorteil ist es jedoch, wenn der Elektromotor ein autonomes Kühlgebläse aufweist, das mit dem Kühlkanal in Strömungsverbindung steht. Dadurch kann eine besonders wirkungsvolle Wärmeabfuhr erzielt werden, wobei die Wärme unabhängig von der Drehzahl der Motorwelle abgeführt werden kann. Insbesondere ermöglicht es das autonome Kühlgebläse, dem Kühlkanal auch bei stehender Motorwelle Kühlluft zuzuführen.

Als günstig hat es sich erwiesen, wenn in den Kühlkanal zumindest ein Strömungsleitelement hineinragt. Dadurch kann beispielsweise sichergestellt werden, dass in den Kühlkanal einströmende Kühlluft zunächst auf einen Wicklungskopf trifft, bevor sie außenseitig am Blechpaket des Stators entlangströmt. Hierzu ist es günstig, wenn zumindest ein Strömungsleitelement in Höhe eines Wicklungskopfes angeordnet ist.

Die nachfolgende Beschreibung einer bevorzugten Ausführungsform der Erfindung dient im Zusammenhang mit der Zeichnung der näheren Erläuterung. Es zeigen:
- Figur 1:: eine schematische Schnittansicht eines erfindungsgemäßen Elektromotors und
- Figur 2:: eine vergrößerte Teilschnittansicht des Elektromotors aus Figur 1.

In der Zeichnung ist schematisch ein Elektromotor 10 dargestellt mit einem zweiteiligen Gehäuse 12, das einen Gehäusetopf 13 und einen Gehäusedeckel in Form eines Lagerschildes 14 aufweist, der den Gehäusetopf 13 stirnseitig abdeckt. Der Gehäusetopf 13 weist einen zylinderförmigen Gehäusemantel 16 auf, an dessen hinterer Stirnseite der Lagerschild 14 anliegt und an dessen vordere Stirnseite sich einstückig ein Gehäuseboden 17 anschließt.

Das Gehäuse 12 wird in axialer Richtung von einer Motorwelle 19 durchgriffen, die mittels Wälzlager 20 und 21 am Gehäuseboden 17 und am Lagerschild 14 drehbar gelagert ist.

Im dargestellten Ausführungsbeispiel bildet der Elektromotor 10 den Antrieb einer Aufzuganlage. Hierzu ist an einem über den Gehäuseboden 17 hervorstehenden Endabschnitt 23 der Motorwelle 19 eine Treibscheibe 24 ohne Zwischenschaltung eines Getriebes drehfest gehalten.

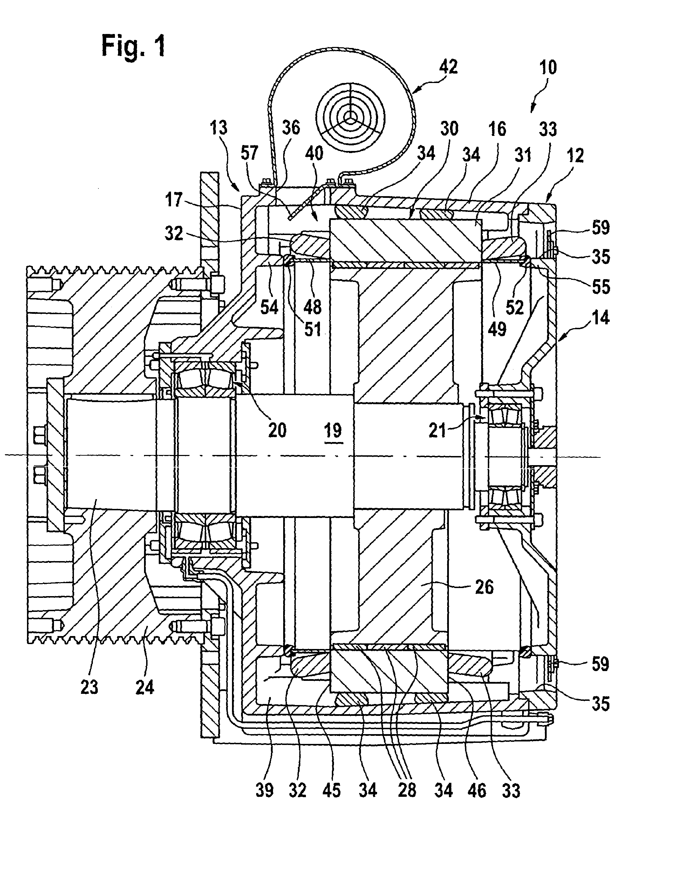

Innerhalb des Gehäuses 12 trägt die Motorwelle 19 einen Rotor 26, der in üblicher Weise drehfest mit der Motorwelle 19 verbunden ist und radial außenseitig mit Permanentmagneten 28 bestückt ist. Schematisch ist in Figur 1 in der unteren Motorhälfte ein kürzerer Rotor für kleinere Motorleistungen und in der oberen Motorhälfte ein längerer Rotor für größere Motorleistungen dargestellt. Alternativ kann der kürzere Rotor oder der längere Rotor in dem Gehäuse 12 angeordnet sein. Dies ermöglicht eine besonders kostengünstige Herstellung, da für mindestens zwei Leistungsklassen gleich ausgestaltete Gehäuse 12 verwendet werden können.

Über einen schmalen Luftspalt schließt sich in radialer Richtung an die Permanentmagnete 28 ein am Gehäuse 12 festgelegter Stator 30 an, der ein Blechpaket 31 aufweist sowie Wicklungen, die in üblicher Weise das Blechpaket 31 durchsetzen und das Blechpaket 31 stirnseitig überragende vordere und hintere Wicklungsköpfe 32 bzw. 33 ausbilden. Der vordere Wicklungskopf 32 ist dem Gehäuseboden 17 zugewandt, und der hintere Wicklungskopf 33 ist dem Lagerschild 14 zugewandt. Letzteres weist in radialer Richtung in Höhe des hinteren Wicklungskopfes 33 mehrere, in Umfangsrichtung gleichmäßig verteilt angeordnete Auslassöffnungen 35 auf, und in radialer Richtung im Abstand zum vorderen Wicklungskopf 32 ist in den Gehäusemantel 16 eine Einlassöffnung 36 eingeformt.

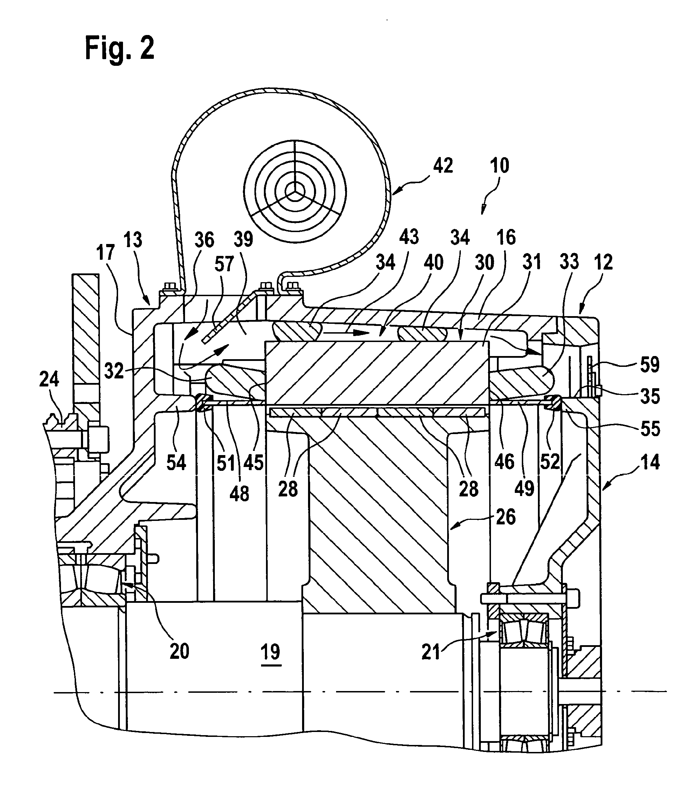

Der Stator 30 ist mittels Statorstützen 34 am Gehäuse 12 abgestützt und im Abstand zum Gehäusetopf 13 und zum Lagerschild 14 angeordnet. Zwischen dem Stator 30 und dem Gehäusetopf 13 verläuft in Umfangsrichtung ein Ringraum 39, der sich vom Gehäuseboden 17 bis zu den Auslassöffnungen 35 des Lagerschildes 14 erstreckt und einen Kühlkanal 40 ausbildet. Der Kühlkanal 40 wird in radialer Richtung von den im Abstand zueinander angeordneten Statorstützen 34 durchgriffen. Die Einlassöffnung 36 mündet in den Kühlkanal 40, und außenseitig schließt sich an die Einlassöffnung 36 ein autonomes Kühlgebläse 42 an, mit dessen Hilfe dem Kühlkanal 40 Kühlluft zugeführt werden kann, die sich innerhalb des Kühlkanals 40 in Umfangsrichtung verteilt und entlang des vorderen Wicklungskopfes 32, anschließend entlang der Außenseite des Blechpaketes 31 und dann entlang des hinteren Wicklungskopfes 33 strömt, um schließlich den Kühlkanal 40 über die Auslassöffnungen 32 zu verlassen. In Figur 2 ist der Strömungsweg der Kühlluft durch die Pfeile 43 veranschaulicht. Die Kühlluft wird dem Kühlkanal 40 mittels des autonomen Kühlgebläses 42 unabhängig von der Drehzahl der Motorwelle 19 zugeführt, so dass der Elektromotor 10 auch bei Motordrehzahl Null gekühlt werden kann.

Um zu vermeiden, dass die Kühlluft in den Luftspalt zwischen den Permanentmagneten 28 und dem Blechpaket 31 eindringen kann, ist in Höhe des Innendurchmessers des Blechpaketes 31 an dessen vorderer und hinterer Stirnseite 45 bzw. 46 jeweils eine Trennwand in Form einer Dichthülse 48 bzw. 49 gehalten, die an ihrem freien Ende einen elastisch verformbaren Dichtring 51 bzw. 52 trägt, der in Form eines Silikonschlauches ausgestaltet und auf die jeweilige Dichthülse 48 bzw. 49 stirnseitig aufgesetzt ist. Alternativ kann vorgesehen sein, dass die Trennwände 48, 49 sich unmittelbar an den Gehäuseboden 17 bzw. an das Lagerschild 14 anschließen und an ihrem der jeweiligen Stirnseite des Blechpaketes 31 zugewandten Ende einen Dichtring tragen.

Unter Zwischenlage des Dichtringes 51 schließt sich an die vordere Dichthülse 48 in axialer Richtung ein Gehäuseteil in Form eines Kragens 54 an, der an den Gehäuseboden 17 angeformt ist. In entsprechender Weise schließt sich unter Zwischenlage des Dichtringes 52 an die hintere Dichthülse 49 ein Kragen 55 an, der an das Lagerschild 14 angeformt ist. Durch den vorderen Kragen 54 und die vordere Dichthülse 48 ist somit der Bereich des Kühlkanals 40 zwischen der vorderen Stirnseite 45 des Blechpaketes 31 und dem Gehäuseboden 17 vom Inneren des Elektromotors 10 abgetrennt, und durch die hintere Dichthülse 49 und den hinteren Kragen 55 ist der Bereich des Kühlkanals zwischen der hinteren Stirnseite 46 und dem Lagerschild 14 vom Inneren des Elektromotors 10 abgetrennt. Die über die Einlassöffnung 36 in den Kühlkanal 40 einströmende Kühlluft kann daher nur innerhalb des Kühlkanals 40 von der Einlassöffnung 36 zu den Auslassöffnungen 35 strömen, sie erreicht jedoch nicht den Bereich des Elektromotors 10, der innerhalb des Innendurchmessers des Blechpaketes 31 angeordnet ist. Die Kühlluft kann die Wicklungsköpfe 32 und 33 vollständig umströmen, da diese jeweils in den Kühlkanal 40 eintauchen. Dadurch kann in wirkungsvoller Weise Wärme abgeführt werden.

Es kann auch vorgesehen sein, dass sich die Kragen 54, 55 dicht an die Innendurchmesser der Wicklungsköpfe 32 bzw. 33 anschließen statt an die Stirnseiten 45 bzw. 46 des Blechpaketes 31. Auch bei einer derartigen Ausgestaltung ist sichergestellt, dass keine Kühlluft vom Kühlkanal 40 in den Bereich des Elektromotors 10 einströmen kann, der innerhalb des Innendurchmessers des Blechpaketes 31 angeordnet ist.

Im Bereich der Einlassöffnung 36 taucht in den Kühlkanal 40 ein Strömungsleitelement 57 ein, mit dessen Hilfe die eintretende Kühlluft zunächst in Richtung des Gehäusebodens 17 und des vorderen Kragens 54 ausgerichtet wird. In diesem Bereich erfährt die Kühlluft eine Umlenkung und umströmt dabei den vorderen Wicklungskopf 32. Die Wärmeabfuhr wird dadurch gesteigert.

Im Bereich der Auslassöffnungen 35 ist ein Lüftungsgitter 59 angeordnet, um zu vermeiden, dass Gegenstände in den Kühlkanal 40 gelangen können.

Der Einsatz des autonomen Kühlgebläses 42 ermöglicht es, den Elektromotor 10 unabhängig von der Drehzahl der Motorwelle 19 wirkungsvoll zu kühlen. Die Kühlluft erreicht hierbei unmittelbar die Bereiche des Elektromotors 10, an denen die Wärme entsteht, so dass eine wirkungsvolle Wärmeabfuhr sichergestellt ist. Trotz des Einsatzes der Permanentmagnete 28 braucht die Kühlluft jedoch nicht gefiltert werden, da mittels der Dichthülsen 48 und 49 und der Kragen 54 und 55 der Kühlkanal 40 von dem innerhalb des Innendurchmessers des Blechpaketes 31 angeordneten Innenraum des Elektromotors 10 abgetrennt ist. Die Kühlluft kann somit nicht in den Luftspalt zwischen den Permanentmagneten 28 und dem Blechpaket 31 eindringen. Eine Verunreinigung der Permanentmagnete 28 wird dadurch verhindert, ohne dass ein Luftfilter zum Einsatz kommen muss. Die Abdichtung des Kühlkanals 40 vom Motorinnenraum erfolgt mittels der Dichtringe 51 und 52, die außerdem einen Ausgleich von Fertigungstoleranzen ermöglichen und bei der Montage des Elektromotors 10 auf einfache Weise auf die Dichthülsen 48 bzw. 49 aufgesteckt werden können.

## Patentansprüche

1. Elektromotor mit einem Gehäuse (12), das einen Rotor (26) und einen Stator (30) aufnimmt, wobei der Rotor (26) mit Permanentmagneten (28) bestückt ist und in Umfangsrichtung vom Stator (30) umgeben ist, und wobei zwischen dem Rotor (26) und dem Stator (30) ein Luftspalt ausgebildet ist und der Stator (30) ein Blechpaket (31) und Wicklungen aufweist mit das Blechpaket (31) stirnseitig überragenden Wicklungsköpfen (32, 33), und mit mindestens einem Kühlkanal (40), der von Kühlluft durchströmbar ist, **dadurch gekennzeichnet, dass** sich der Kühlkanal (40) außenseitig entlang des Blechpakets (31) und entlang der Wicklungsköpfe (32, 33) erstreckt und vom Luftspalt abgetrennt ist.

2. Elektromotor nach Anspruch 1, **dadurch gekennzeichnet, dass** die Wicklungsköpfe (32, 33) in den Kühlkanal (40) eintauchen.

3. Elektromotor nach Anspruch 1 oder 2, **dadurch gekennzeichnet, dass** um das Blechpaket (31) herum zum Gehäuse (12) hin Kühlkanäle und den Stator (30) abstützende Statorstützen (34) angeordnet sind, wobei bezogen auf die Umfangsrichtung die Statorstützen (34) schmäler sind als die Kühlkanäle.

4. Elektromotor nach Anspruch 1 oder 2, **dadurch gekennzeichnet, dass** ein einziger Kühlkanal (40) das Blechpaket (31) und die Wicklungsköpfe (32,33) umgibt, wobei den Stator (30) abstützende Statorstützen (34) den Kühlkanal (40) in radialer Richtung durchgreifen.

5. Elektromotor nach einem der voranstehenden Ansprüche, **dadurch gekennzeichnet, dass** sich an die beiden Stirnseiten (45, 46) des Blechpakets (31) jeweils eine Trennwand (48, 49) anschließt, die der radialen Innenseite eines Wicklungskopfes (32, 33) gegenüberliegt.

6. Elektromotor nach Anspruch 5, **dadurch gekennzeichnet, dass** die Trennwände (48, 49) hülsenförmig ausgestaltet sind.

7. Elektromotor nach Anspruch 5 oder 6, **dadurch gekennzeichnet, dass** die Trennwände (48, 49) jeweils zwischen einem Gehäuseteil (54, 55) und einer Stirnseite (45, 46) des Blechpakets (31) angeordnet sind.

8. Elektromotor nach Anspruch 5 oder 6, **dadurch gekennzeichnet, dass** die Trennwände (48, 49) von Teilen des Gehäuses (12) ausgebildet werden.

9. Elektromotor nach Anspruch 7, **dadurch gekennzeichnet, dass** zwischen den Trennwänden (48, 49) und den Gehäuseteilen (54, 55) jeweils mindestens ein Dichtungselement (51, 52) angeordnet ist.

10. Elektromotor nach Anspruch 8 oder 9, **dadurch gekennzeichnet, dass** zwischen den Trennwänden (48, 49) und der jeweils zugeordneten Stirnseite (45, 46) des Blechpakets (31) mindestens ein Dichtungselement angeordnet ist.

11. Elektromotor nach einem der Ansprüche 5 bis 10, **dadurch gekennzeichnet, dass** die Trennwände (48, 49) oder zumindest jeweils ein Rand der Trennwände (48, 49) als Dichtungselement ausgebildet sind.

12. Elektromotor nach Anspruch 9, 10 oder 11, **dadurch gekennzeichnet, dass** das Dichtungselement (51, 52) einen verformbaren Hohlkörper ausbildet.

13. Elektromotor nach einem der Ansprüche 9 bis 12, **dadurch gekennzeichnet, dass** das Dichtungselement als ringförmiger Schlauch (51, 52) ausgestaltet ist.

14. Elektromotor nach einem der voranstehenden Ansprüche, **dadurch gekennzeichnet, dass** der Elektromotor (10) ein autonomes Kühlgebläse (42) aufweist, das mit dem Kühlkanal (40) in Strömungsverbindung steht.

15. Elektromotor nach einem der voranstehenden Ansprüche , **dadurch gekennzeichnet, dass** in den Kühlkanal (40) zumindest ein Strömungsleitelement (57) hineinragt.

16. Elektromotor nach Anspruch 14, **dadurch gekennzeichnet, dass** ein Strömungsleitelement (57) einem Wicklungskopf (32) benachbart angeordnet ist.
